# FASCICULE DE BREVET EUROPEEN

(11) **EP 3 588 359 B1**
(45) Date de publication et mention de la délivrance du brevet: **30.08.2023**
(21) Numéro de dépôt: 19180688.4
(22) Date de dépôt: 17.06.2019
(51) Int. Cl.: G06F 21/64, G06F 11/10, G06F 21/51, G06F 9/455

(54) **PROCÉDÉ DE VÉRIFICATION DE L'INTÉGRITÉ D'UN CODE APPLICATIF, DISPOSITIF ET PRODUIT PROGRAMME D'ORDINATEUR CORRESPONDANTS**
VERFAHREN ZUM INTEGRITÄTSVERIFIZIERUNG VON ANWENDUNGENCODES, VORRICHTUNG UND ZUGEHÖRIGES COMPUTERPROGRAMMPRODUKT DAFÜR
METHOD FOR DETERMINING THE INTEGRITY OF AN APPLICATION CODE, CORRESPONDING DEVICE AND COMPUTER PROGRAM PRODUCT

(30) Priorité: 29.06.2018 FR 1856056
(43) Date de publication de la demande: 01.01.2020
(73) Titulaire: Banks and Acquirers International Holding, 75015 Paris (FR)
(72) Inventeur: ROLIN, Christian, 07500 GUILHERAND-GRANGES (FR); BERNELAS, Maxime, 26300 CHATUZANGE-LE-GOUBET (FR)
(74) Mandataire: Germain Maureau

(56) Documents cités:
- EP-A1- 2 362 314
- EP-A1- 3 026 558
- EP-A1- 3 026 560
- WO-A1-2016/105927

## Description

### 1. Domaine de l'invention

Le domaine de l'invention est celui des dispositifs électroniques utilisés pour la mise en oeuvre d'applications logicielles. Plus particulièrement, l'invention se rapporte aux dispositifs utilisés pour effectuer des opérations qui font intervenir ou portent sur des objets de nature confidentielle (telles que des opérations de paiement, par exemple), et qui à ce titre sont tenus de respecter certaines exigences sécuritaires définies notamment dans le cadre de normes ou de certifications.

### 2. Art antérieur

Certains dispositifs électroniques, comme les terminaux de paiement par exemple, sont spécifiquement conçus, tant sur le plan matériel que logiciel, pour offrir une protection la plus optimale possible des données confidentielles qui sont susceptibles d'y être saisies ou stockées. Afin de garantir un niveau de sécurité suffisant, des normes ont été créées, et des procédures de certification visant à établir la conformité de tels dispositifs à ces normes ont été développées. A titre illustratif, l'utilisation des terminaux de paiement est soumise à une règlementation sécuritaire obligatoire et imposée : ces terminaux doivent ainsi être certifiés conformes aux normes PCI (pour « Payment Card Industry »), comme par exemple à la norme PCI-PED (pour « Payment Card Industry - Pin Entry Device»). Ces normes définissent des exigences sécuritaires tant sur la conception physique du matériel que sur la partie logicielle mise en oeuvre au sein de ces dispositifs. Par exemple, les données sensibles doivent généralement être chiffrées, et leur traitement est soumis à des protocoles cryptographiques. L'utilisation de composants logiciels aptes à être mis en oeuvre uniquement au sein de processeurs sécurisés, inaccessibles à des tiers, est également généralement requise.

Une contrepartie de ce niveau de sécurisation important est que la souplesse d'utilisation offerte par de tels dispositifs reste limitée. Faire certifier une application afin qu'elle puisse être autorisée à être exécutée au niveau du processeur sécurisé du dispositif est souvent long et contraignant. Dans un monde riche en équipements électroniques divers tels que téléphones mobiles, assistants personnels ou micro-ordinateurs, un besoin de souplesse comparable se fait sentir pour les dispositifs électroniques destinés à être utilisés pour effectuer des opérations qui font intervenir ou portent sur des objets de nature confidentielle, également appelés dispositifs sécurisés. On sait que les systèmes d'exploitation communément dits ouverts offrent une abondance d'applications utiles et conviviales qu'il est intéressant de pouvoir mettre en oeuvre pour satisfaire ce besoin de souplesse sur les dispositifs sécurisés. Aussi, de plus en plus de dispositifs électroniques sécurisés comprennent, en plus du processeur sécurisé, un processeur non sécurisé apte à exécuter des applications tierces, par exemple téléchargeables sur une plate-forme de distribution mise à disposition par le constructeur du dispositif électronique. Cette ouverture à d'autres applications logicielles que celles rigoureusement sécurisées a pour inconvénient de mettre potentiellement en péril la sécurité des données saisies sur le dispositif sécurisé. Ainsi une application malveillante pourrait espionner et trahir des processus sécuritaires de l'équipement, dans le but de récupérer des informations confidentielles. Une application malveillante pourrait également imiter l'apparence d'une application légitime (par exemple une application de paiement) afin de tromper un utilisateur et ainsi récupérer ses informations confidentielles. Des solutions existent afin de limiter ces risques, et rester conforme à des exigences sécuritaires prédéfinies. Par exemple, les paquets d'installation des applications disponibles sur la plate-forme de distribution du constructeur peuvent être signés électroniquement au moyen d'une clé cryptographique du constructeur. La signature du paquet d'installation est alors vérifiée par le dispositif électronique au moment de l'installation de l'application. Ainsi, au moment où elle est installée, l'application est considérée comme digne de confiance car son origine est certifiée et qu'elle a été distribuée via une plate-forme connue et a priori gage d'une certaine qualité : avant d'être proposée à la distribution sur la plate-forme du constructeur, l'application est supposée avoir été testée et validée comme conforme sur le plan sécuritaire. De telles mesures ne garantissent cependant pas l'intégrité du code exécutable de l'application tout au long de sa durée de vie, de son installation à sa mise à jour ou à sa suppression du dispositif électronique. En effet, le code d'une application est susceptible d'être corrompu - il est par exemple pollué par des séquences d'exécution malveillantes - postérieurement à l'installation de l'application, sans que cela soit détecté. A contrario, toute modification du code d'une application en dehors du moment de son installation ou d'une mise à jour ne résulte pas nécessairement d'une opération malveillante : la modification peut par exemple être le fruit d'une opération légitime d'optimisation de code mise en oeuvre par le système d'exploitation du dispositif électronique. Par exemple, le système d'exploitation Android*^{™}* intègre des processus d'optimisation du code des applications en fonction de leur utilisation. De telles modifications ne devraient alors pas être considérées comme remettant en cause l'intégrité du code applicatif, dans la mesure où elles sont le résultat d'opérations connues, maitrisées et autorisées.

Il existe donc un besoin de proposer des solutions visant à assurer que l'intégrité du code d'une application est préservée tout au long de sa durée de vie, notamment bien après son installation sur un dispositif électronique. De telles solutions devraient notamment permettre de vérifier la validité du code d'une application, même quand ce code fait l'objet d'une optimisation continue susceptible de le faire évoluer. Des exemples pertinents de l'art antérieur illustrant la détermination de la validité d'un code logiciel installé ou réinstallé sur un dispositif et susceptible d'évoluer et d'être optimisé au cours de l'exécution d'une application fonctionnant sur ce dispositif, ladite détermination de la validité visant à assurer l'intégrité du code logiciel en utilisant une valeur de hachage calculée, une somme de contrôle ou toute autre empreinte de code comme valeur de référence, sont fournis par EP 3 026 560, par EP 3 026 558, par EP 2 362 314 et par WO 2016/105927.

### 3. Résumé de l'invention

La technique proposée offre une solution qui ne présente pas au moins certains des problèmes de l'art antérieur, grâce à un procédé original de détermination d'une validité d'un code d'une application. Ce procédé est mis en oeuvre au sein d'un dispositif électronique comprenant un processeur de traitement, une mémoire non sécurisée et une mémoire sécurisée. Selon la technique proposée, ce procédé comprend au moins une itération des étapes suivantes :
- une étape de chargement de ladite application dans ladite mémoire non sécurisée, délivrant un code applicatif courant ;
- une étape de détermination d'une empreinte dudit code applicatif courant, délivrant une empreinte courante associée à ladite application ;
- une étape d'obtention, au sein de la ladite mémoire sécurisée, d'une empreinte de référence associée à ladite application ;
- une étape de comparaison de ladite empreinte courante avec ladite empreinte de référence ; et
- lorsque ladite empreinte courante est identique à ladite empreinte de référence, une étape de validation dudit code applicatif courant, comprenant une étape d'exécution d'un processus d'optimisation du code applicatif courant de ladite application, délivrant un code applicatif optimisé.

De cette manière, la validité du code d'une application peut être vérifiée à tout moment au cours de la durée de vie de l'application, même bien après son installation sur le dispositif électronique. De cette manière, on s'assure en outre que l'exécution d'un processus d'optimisation du code de l'application est opérée sur un code applicatif sain, qui n'a pas fait l'objet de modifications non autorisées. Ainsi, les modifications qui résultent de l'exécution du processus d'optimisation sur ce code, qui sont des modifications autorisées et admises comme ne remettent pas en cause la validité du code applicatif, délivrent un code applicatif optimisé qui peut également être lui-même considéré comme sain (c'est à dire valide).

Dans un mode de réalisation particulier, ladite étape de validation du code applicatif courant comprend en outre :
- une étape de détermination d'une empreinte dudit code applicatif optimisé, délivrant une empreinte post-optimisation associée à ladite application ;
- une étape d'enregistrement de ladite empreinte post-optimisation dans ladite mémoire sécurisée, en tant que nouvelle empreinte de référence associée à ladite application.

De cette manière, toute modification autorisée du code de l'application entraine la mise à jour, dans la mémoire sécurisée du dispositif électronique, de l'empreinte de référence associée au code de l'application. Ainsi, le procédé de détermination de la validité du code de l'application peut être mis en oeuvre de manière régulière tout au long de la durée de vie de l'application, et le mécanisme de vérification de l'intégrité du code selon la technique proposée reste fiable et robuste, même quand le code de l'application est soumis à une optimisation continue.

Dans un mode de réalisation particulier, ledit procédé de détermination d'une validité d'un code d'une application comprend une étape d'initialisation de ladite empreinte de référence, mise en oeuvre lors d'une installation de ladite application sur ledit dispositif électronique.

Selon une caractéristique particulière de ce mode de réalisation, ladite étape d'initialisation de l'empreinte de référence comprend :
- une étape de vérification d'une signature d'au moins un paquet d'installation de ladite application ; et
- lorsque ladite vérification de signature est positive :
   - une étape d'obtention d'une première empreinte de référence pour ladite application ;
   - une étape d'enregistrement de ladite première empreinte de référence dans ladite mémoire sécurisée.

De cette manière, une empreinte de référence initiale, qui correspond à la première empreinte de référence stockée dans la mémoire sécurisée pour l'application considérée, est déterminée à un moment où le code de l'application est considéré comme valide, puisque ce moment coïncide avec une phase d'installation de l'application qui intègre déjà ses propres mécanismes de vérification de l'intégrité du code.

Dans un mode de réalisation particulier, ledit procédé de détermination d'une validité d'un code d'une application comprend, lorsque ladite empreinte courante est différente de ladite empreinte de référence, une étape de mise en oeuvre d'au moins une mesure de protection.

Ainsi, les modifications non autorisées de l'application sont détectées, et diverses mesures peuvent être mises en oeuvre afin de protéger les données saisies ou enregistrées sur le dispositif électronique.

Selon une caractéristique particulière de ce mode de réalisation ladite au moins une mesure de protection appartient au groupe comprenant :
- l'affichage d'un message d'alerte sur un écran dudit dispositif électronique ;
- le blocage de toute transmission de données à destination de ladite application ;
- le blocage de ladite application ;
- le blocage dudit dispositif électronique.

Ainsi le dispositif électronique dispose de différents moyens, pouvant être utilisés seuls ou de manière complémentaire, pour avertir un utilisateur qu'une application a fait l'objet de modifications non autorisées, et le cas échéant pour rendre cette application inopérante. Ces moyens peuvent comprendre le blocage partiel ou total de l'application incriminée. Face à une situation considérée comme particulièrement critique par exemple, un tel blocage peut être étendu au dispositif électronique dans son ensemble.

Dans un mode de réalisation particulier, l'empreinte courante et l'empreinte de référence associées à ladite application sont déterminées par la mise en oeuvre d'une fonction de hachage.

Ainsi, l'empreinte courante associé à l'application et l'empreinte de référence associée à l'application sont des empreintes de hachages, et la fonction de hachage utilisée peut être choisie de manière à limiter la taille occupée par ces empreintes en mémoire du dispositif électronique.

Dans un mode de réalisation particulier, ledit procédé de détermination d'une validité d'un code d'une application comprend, préalablement à ladite étape d'exécution d'un processus d'optimisation, une étape de vérification de l'intégrité du code du processus d'optimisation, comprenant :
- une étape de détermination d'une empreinte du code dudit processus d'optimisation, délivrant une empreinte courante associée audit processus d'optimisation ;
- une étape d'obtention, dans ladite mémoire sécurisée, d'une empreinte de référence associée audit processus d'optimisation ;
- une étape de comparaison de ladite empreinte courante associée au processus d'optimisation avec ladite empreinte de référence associée au processus d'optimisation ; et
- lorsque l'empreinte courante associée au processus d'optimisation est identique à l'empreinte de référence associée au processus d'optimisation, la mise en oeuvre de ladite étape d'exécution du processus d'optimisation ;
- lorsque l'empreinte courante associée au processus d'optimisation est différente de l'empreinte de référence associée au processus d'optimisation, la suspension de ladite étape d'exécution du processus d'optimisation.

De cette manière, le code du processus d'optimisation fait lui-même l'objet d'une vérification d'intégrité, dont le résultat conditionne l'exécution de ce processus. Ainsi, on s'assure que le processus d'optimisation n'est pas lui-même corrompu avant d'autoriser son exécution.

Selon un autre aspect, la technique proposée se rapporte également à un dispositif électronique qui comprend un processeur de traitement, une mémoire non sécurisée et une mémoire sécurisée. Un tel dispositif électronique comprend par ailleurs :
- des moyens de chargement d'une application dans ladite mémoire non sécurisée, délivrant un code applicatif courant ;
- des moyens de détermination d'une empreinte dudit code applicatif courant, délivrant une empreinte courante associée à ladite application ;
- des moyens d'obtention, au sein de ladite mémoire sécurisée, d'une empreinte de référence associée à ladite application ;
- des moyens de comparaison de l'empreinte courante avec l'empreinte de référence ; et
- des moyens de validation dudit code applicatif courant mis en oeuvre lorsque ladite empreinte courante est identique à ladite empreinte de référence, lesdits moyens de validation comprenant des moyens d'exécution d'un processus d'optimisation du code applicatif courant de ladite application, délivrant un code applicatif optimisé.

Dans un mode de réalisation particulier, lesdits moyens de validation du code applicatif courant comprennent en outre :
- des moyens de détermination d'une empreinte dudit code applicatif optimisé, délivrant une empreinte post-optimisation associée à ladite application ;
- des moyens d'enregistrement de ladite empreinte post-optimisation dans ladite mémoire sécurisée, en tant que nouvelle empreinte de référence associée à ladite application.

Dans un mode de réalisation particulier, le dispositif électronique de saisie de données est un terminal de paiement. Ainsi, un tel terminal de paiement, sécurisé par la mise en oeuvre des techniques précédemment décrites, est en mesure de résister à des attaques consistant à modifier une application lors de son installation ou postérieurement à son installation, ou lors de sa mise à jour. On permet donc, tout en autorisant un utilisateur à installer une application ouverte, à prévenir un acte de malveillance consistant à infecter cette application, dans l'objectif de contaminer le terminal de paiement avec une application tierce ou un service non autorisé. Il est ainsi possible de combiner à la fois l'ouverture procurée par l'installation de multiples applications et la sécurité nécessaire à la mise ne oeuvre de données de paiement.

Selon une implémentation préférée, les différentes étapes du procédé de détermination d'une validité d'un code d'une application selon la technique proposée sont mises en oeuvre par un ou plusieurs logiciels ou programmes d'ordinateur, comprenant des instructions logicielles destinées à être exécutées par un processeur de données selon la technique proposée et étant conçu pour commander l'exécution des différentes étapes des procédés.

En conséquence, la technique proposée vise aussi un programme, susceptible d'être exécuté par un ordinateur ou par un processeur de données, et en particulier un processeur sécurisé, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Liste des figures

D'autres caractéristiques et avantages de l'invention apparaîtront plus clairement à la lecture de la description suivante d'un mode de réalisation préférentiel de la technique proposée, donné à titre de simple exemple illustratif et non limitatif, et des dessins annexés parmi lesquels :
- la figure 1 illustre les étapes mises en oeuvre pour la réalisation du procédé de détermination d'une validité d'un code d'une application, selon un mode de réalisation particulier de la technique proposée ;
- la figure 2 décrit un exemple de dispositif électronique de saisie de données apte à mettre en oeuvre la technique proposée, dans un mode de réalisation particulier de la technique proposée.

### 5. Description détaillée

### 5.1. Principe général et présentation d'un mode de réalisation

Le principe général de la technique proposée consiste à vérifier la validité du code d'une application, postérieurement à son installation sur un dispositif électronique. Par vérification de la validité, également appelée vérification de l'intégrité dans le présent exposé, on entend le fait de s'assurer que le code de l'application n'a pas fait l'objet de modifications non autorisées, qui pourraient potentiellement être d'origine malveillante. De telles modifications non autorisées pourraient par exemple permettre à un attaquant de récupérer de manière frauduleuse des informations confidentielles stockées ou saisies sur le dispositif électronique, à l'insu de l'utilisateur (comme par exemple des informations de paiement). En revanche, des modifications autorisées du code de l'application, comme celle résultant d'un processus d'optimisation connu et légitime, ne sont pas considérées comme remettant en cause la validité ou l'intégrité du code de l'application. Selon la technique proposée, la vérification de la validité du code d'une application est préférentiellement mise en oeuvre de manière régulière. Ainsi, on augmente les chances de détecter une modification non autorisée de l'application tout au long de sa durée de vie, c'est à dire entre le moment de son installation dans une version donnée sur le dispositif électronique, et le moment de sa mise à jour ultérieure dans une autre version ou de sa suppression du dispositif électronique. Plus particulièrement, il est proposé de conditionner l'exécution d'un processus d'optimisation du code de l'application - également appelé code applicatif courant - à la vérification préalable que ce code applicatif courant est bien valide. Ainsi, on s'assure que le processus d'optimisation agit sur un code intègre, ce qui permet de considérer le code applicatif optimisé produit par le processus d'optimisation comme étant également intègre.

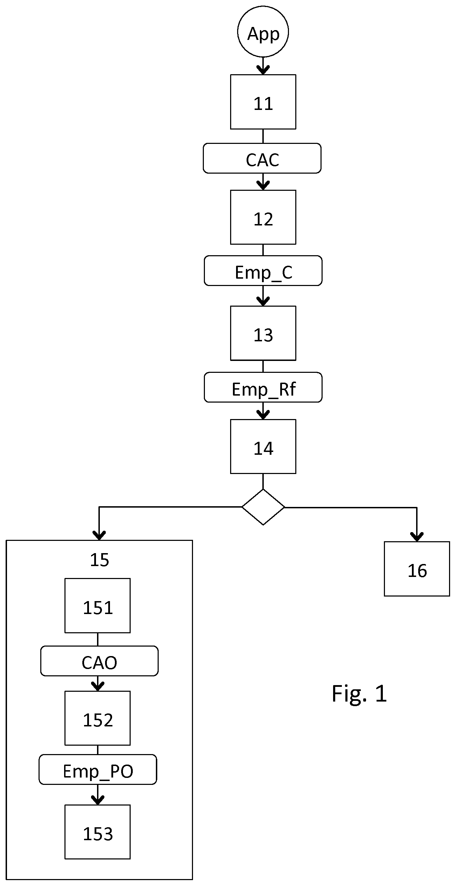

On présente, en relation avec la **figure 1****,** un exemple d'implémentation du procédé de détermination d'une validité d'un code d'une application *App,* dans un mode de réalisation particulier de la technique proposée. L'application *App* est installée au sein d'un dispositif électronique comprenant un processeur de traitement, une mémoire sécurisée et une mémoire non sécurisée. Une description plus détaillée d'un dispositif électronique apte à mettre en oeuvre un tel procédé est donnée ultérieurement, dans un mode de réalisation particulier. Le procédé comprend au moins une itération des étapes décrites ci-après.

En premier lieu, une étape de chargement 11 de l'application dans la mémoire non sécurisée du dispositif est mise en oeuvre. A l'issue de cette étape, le processeur de traitement a accès à un code applicatif courant *CAC* de l'application, lui permettant le cas échéant d'exécuter ladite application.

Le processeur de traitement détermine alors, dans une étape 12, une empreinte *Emp_C* du code applicatif courant. Selon une caractéristique particulière, cette empreinte, qui correspond à une empreinte courante associée à ladite application, est obtenue en appliquant une fonction de hachage (par exemple la fonction MD5 ou la fonction SHA1) sur le code applicatif courant *CAC.* L'empreinte de hachage (ou « valeur de hash ») obtenue forme ainsi un condensat cryptographique représentatif du code applicatif courant, sans qu'il soit possible de retrouver (d'obtenir par opération inverse) le code applicatif courant à partir de cette empreinte de hachage.

Dans une étape 13, le processeur de traitement obtient également, au sein de la mémoire sécurisée, une empreinte de référence *Emp_Rf* associée à l'application *App.* Dans un mode de réalisation particulier de la technique proposée, cette empreinte de référence a pu être initialisée une première fois lors de l'installation de l'application sur le dispositif électronique (ou bien pendant le processus d'installation, ou bien immédiatement après). Selon une caractéristique particulière de ce mode de réalisation, l'empreinte de référence *Emp_Rf* est notamment déterminée après vérification de la signature d'au moins un paquet d'installation de l'application, puis enregistrée en mémoire sécurisée. Dans un mode de réalisation, lorsque les empreintes sont déterminées par application d'une fonction de hachage, la même fonction de hachage est évidemment utilisée pour la détermination de l'empreinte de référence *Emp_Rf* et pour la détermination de l'empreinte *Emp_C* du code applicatif courant. L'obtention, par le processeur de traitement, de l'empreinte de référence peut être effectuée par un processeur sécurisé, lequel a seul accès à la mémoire sécurisée, afin de garantir la confidentialité et l'intégrité des données enregistrées en mémoire sécurisée.

Les étapes 12 et 13 peuvent être mises en oeuvre en parallèle, ou encore l'une après l'autre dans n'importe quel ordre.

Une fois que l'empreinte courante *Emp_C* et l'empreinte de référence *Emp_Rf* sont connues, le processeur de traitement les compare dans une étape 14.

Lorsque l'empreinte courante *Emp_C* est identique à l'empreinte de référence *Emp_Rf,* une étape de validation 15 du code applicatif courant *CAC* est mise en oeuvre. Par cette étape, l'intégrité du code applicatif est confirmée : en d'autres termes, la mise en oeuvre de cette étape signifie que le code applicatif courant n'a pas fait l'objet de modifications non autorisées. Le code est donc considéré comme sain, non-corrompu, il est validé et peut de ce fait faire l'objet de divers traitements autorisés. Selon la technique proposée, l'étape de validation comprend notamment une étape d'exécution d'un processus d'optimisation 151 du code applicatif courant de ladite application, délivrant un code applicatif optimisé *CAO.* On assure ainsi que l'optimisation de code est effectué sur un code initialement intègre.

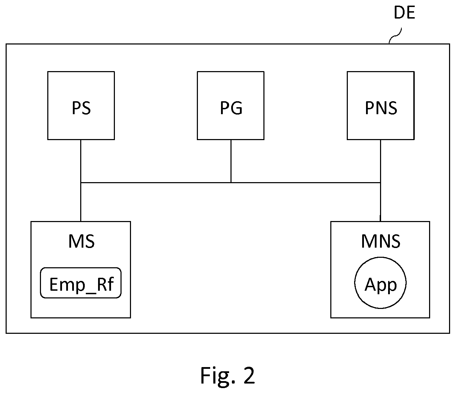

Dans le mode de réalisation particulier présenté en relation avec la figure 2, deux étapes supplémentaires 152 et 153 sont réalisées durant l'étape de validation 15 du code applicatif courant. L'étape 152 est une étape de détermination d'une empreinte du code applicatif optimisé, délivrant une empreinte post-optimisation *Emp_PO* associée à l'application. L'étape 153 correspond à une étape d'enregistrement de cette empreinte post-optimisation *Emp_PO* dans la mémoire sécurisée du dispositif électronique, en tant que nouvelle empreinte de référence associée à ladite application. En effet, puisque le code applicatif courant *CAC* a été vérifié comme étant valide (intègre), ce qui a permis d'autoriser son optimisation, et puisque que les modification apportées par le processus d'optimisation sont considérées comme ne remettant pas en cause l'intégrité du code, le code applicatif optimisé *CAO,* qui correspond au nouveau code de l'application, est lui même considéré comme intègre. On calcule donc, sur la base de ce code optimisé, une nouvelle empreinte de référence, qui vient remplacer, en mémoire sécurisée, l'ancienne empreinte de référence devenue obsolète. Ainsi, lors d'une prochaine mise en oeuvre du procédé de détermination de validité, ou d'une prochaine itération des étapes qui le composent, l'empreinte courante de l'application sera comparée à la dernière empreinte de référence enregistrée dans la mémoire sécurisée. Les étapes 152 et 153 ne sont cependant pas mises en oeuvre de manière systématique. Ainsi, il n'y a par exemple pas lieu de déterminer puis d'enregistrer une nouvelle empreinte de référence si le processus d'optimisation n'entraine aucun modification du code sur lequel il est lancé (par exemple parce que l'application a déjà atteint un degré d'optimisation optimal au regard de l'utilisation actuelle qu'en fait l'utilisateur, ou parce que le code de l'application a déjà fait l'objet d'une optimisation peu de temps auparavant, et qu'une nouvelle optimisation trop proche temporellement d'une optimisation précédente n'a pas nécessairement d'effet).

Dans un mode de réalisation particulier, lorsqu'il est établi à l'issue de l'étape de comparaison 14 que l'empreinte courante *Emp_C* est différente de l'empreinte de référence *Emp_Rf,* une étape 16 de mise en oeuvre d'au moins une mesure de protection est exécutée. Cette étape de mise en oeuvre d'au moins une mesure de protection vise à a minima à alerter l'utilisateur que le code de l'application App installée sur le dispositif électronique a fait l'objet d'une modification non autorisée. Le cas échéant, les mesures de protection mises en oeuvre peuvent également consister en un blocage de toute transmission de données à destination de l'application incriminée *App,* un blocage des accès de l'application *App* au contenu de toute mémoire du dispositif électronique, un blocage partiel ou total de l'application *App,* voire en un blocage du dispositif électronique dans son ensemble. Ces différentes mesures de protection, qui constituent autant de modes de réalisation particuliers de la technique proposée, peuvent être déployées indépendamment les unes des autres ou de manière complémentaire.

Dans un mode de réalisation particulier, le code du processus d'optimisation fait lui-même l'objet d'une vérification de son intégrité avant toute mise en oeuvre de ce processus. En effet, dans la mesure où le processus d'optimisation est amené à analyser le code des applications installées sur le dispositif électronique, et qu'il est autorisé à effectuer des modification du code de ces applications, il s'agit d'un processus particulièrement critique. Bien que le processus d'optimisation soit généralement considéré comme sûr au moment de son installation (parce que le paquet d'installation au sein duquel il est inclus est signé électroniquement avec une clé cryptographique du constructeur du dispositif électronique par exemple, et que cette signature est vérifié à l'installation), il faut donc néanmoins veiller à ce que le code de ce processus d'optimisation n'ait pas lui-même par la suite fait l'objet de modifications non autorisées (et en particulier d'origine malveillante). Le même principe général que celui appliqué pour la détermination de la validité du code de l'application *App* peut alors être adopté pour s'assurer de ce fait. Ainsi, les étapes suivantes peuvent être mises en oeuvre avant tout lancement du processus d'optimisation :
- la détermination d'une empreinte courante du code du processus d'optimisation ;
- l'obtention, au sein de la mémoire sécurisée du dispositif électronique, d'une empreinte de référence associée au processus d'optimisation ; et
- la comparaison de l'empreinte courante du code du processus d'optimisation avec l'empreinte de référence associée au processus d'optimisation.

Le processus d'optimisation n'est exécuté que s'il résulte de cette comparaison que l'empreinte courante est identique à l'empreinte de référence. Dans le cas contraire, le code du processus d'optimisation est considéré comme n'étant pas digne de confiance : il n'est donc pas exécuté, et des mesures de protection appropriées peuvent alors être mises en oeuvre pour avertir l'utilisateur, voir bloquer partiellement ou totalement le dispositif électronique.

### 5.2 Mise en oeuvre du procédé

Le procédé a été décrit dans le cas général en relation avec un dispositif électronique comprenant un processeur de traitement. La technique proposée peut s'appliquer plus spécifiquement aux dispositifs électroniques tels que celui décrit ultérieurement en relation avec la figure 2, qui comprennent deux processeurs : un processeur sécurisé et un processeur non sécurisé. L'intérêt de tels dispositifs réside dans leur capacité à pouvoir mettre en oeuvre non seulement des applications sécurisées, en ce sens qu'elles ont le plus souvent été certifiées par un organisme de confiance et qu'elles sont autorisées à être exécutées par le processeur sécurisé, mais également des applications tierces, non nécessairement certifiées, qui sont exécutées sur le processeur non sécurisé.

Le processeur sécurisé a accès à la mémoire sécurisée, et l'association de ces deux éléments forme un environnement d'exécution sécurisé au sein du dispositif. Par environnement d'exécution sécurisé, on entend une sécurisation qui peut être aussi bien matérielle que logicielle, avec notamment la mise en oeuvre de différentes techniques de protection (constitution physique du boitier de protection des composants sécurisés, circuits électroniques gravés dans la masse ou multi couches, chiffrement des données, etc.). Cette sécurisation repose également sur l'utilisation, au niveau du processeur sécurisé, d'un système d'exploitation sécurisé, dans le sens où il dispose d'un ensemble de moyens (de contrôle, de restriction d'accès, cryptographiques, etc.) censé le rendre moins vulnérable et le protéger efficacement face aux différents type d'attaques qu'il pourrait subir. A l'inverse, le système d'exploitation mis en oeuvre au sein du processeur non sécurisé du dispositif électronique est un système qui peut être qualifié de «système ouvert », dans le sens où suffisamment d'accès à ce système sont largement diffusés, ce qui favorise le développement de nombreuses applications. Ces applications, lorsqu'elles sont installées sur le dispositif électronique, sont chargées dans une mémoire non sécurisée auquel le système d'exploitation ouvert a accès. La notion de système d'exploitation ouvert englobe non seulement les systèmes d'exploitation réellement ouverts tels que le sont les systèmes UNIX et LINUX d'origine, mais également les systèmes à large diffusion commerciale tels que le sont par exemple les différentes versions du système Android^{™}. Parmi ces systèmes d'exploitation, certains, comme Android^{™} par exemple, sont dotés de fonctionnalités d'optimisation de code fonctionnant en tâche de fond, qui peuvent correspondre au processus d'optimisation tel que décrit précédemment. Ces processus d'optimisation consistent par exemple à optimiser en continu le code exécutable des applications installées en fonction de l'utilisation qui en est faite, et permettent ainsi de générer au fur et à mesure du temps un code applicatif plus performant pour les parties des applications les plus souvent utilisées.

Dans ce contexte, le procédé selon la technique proposée peut être initié et implémenté de différentes manières, présentées ci-après.

Selon une première approche, correspondant à un mode de réalisation particulier, la mise en oeuvre du procédé de détermination de la validité du code d'une application est contrôlée par un processus sécurisé dédié exécuté au sein du processeur sécurisé. Ce processus sécurisé est constamment « à l'écoute » des opérations effectuées par le processeur non sécurisé, en tâche de fond. Lorsque le processus sécurisé dédié détecte que le processeur non sécurisé est sollicité pour exécuter le processus d'optimisation, il génère une interruption du processus d'optimisation (interruption logicielle ou directement matérielle), qui est alors suspendu tant que l'intégrité du code applicatif n'a pas été confirmée au niveau du processeur sécurisé. Le processeur sécurisé, qui a également accès à la mémoire non sécurisée, détermine l'empreinte courante associée à l'application, obtient l'empreinte de référence au sein de la mémoire sécurisée, et compare ces deux empreintes. Si elles sont identiques, le processeur sécurisé délivre une donnée de validation du code applicatif lors de l'étape de validation (par exemple sous la forme d'une donnée binaire de type booléen), et il autorise la reprise du processus d'optimisation au niveau du processeur non sécurisé.

Selon une autre approche, correspondant à un autre mode de réalisation particulier, c'est un processus dédié exécuté au sein du processeur non sécurisé qui déclenche la mise en oeuvre du procédé de détermination de la validité du code d'une application. Plus particulièrement, avant toute exécution du processus d'optimisation, ce processus dédié effectue un appel à un processus ou à un programme dédié correspondant du processeur sécurisé, de manière à ce que celui-ci détermine l'empreinte courante associée à l'application (soit par ses propres moyens, via un accès à la mémoire non sécurisé, soit parce que le processus dédié appelant exécuté au niveau du processeur non sécurisé lui transmet cette information), obtienne l'empreinte de référence associée à l'application au sein de la mémoire sécurisée, puis compare ces deux empreintes. Si elles sont identiques, le processeur sécurisé délivre une donnée de validation du code applicatif au processeur non sécurisé lors de l'étape de validation, et l'exécution du processus d'optimisation au niveau du processeur non sécurisé est alors déclenchée.

Dans le contexte d'un dispositif électronique comprenant un processeur sécurisé et un processeur non sécurisé, on distingue donc deux approches principales possibles pour la mise en oeuvre de la technique proposée : une approche selon laquelle une suspension de l'exécution du processus d'optimisation déjà initiée au niveau du processeur non sécurisé est mise en oeuvre tant que l'intégrité du code courant de l'application à optimiser n'est pas établie, et une approche selon laquelle le processus d'optimisation n'est déclenché que si l'intégrité du code courant de l'application à optimiser a déjà été établie. Quelque soit l'approche retenue, les étapes qui sont considérées comme critiques d'un point de vue sécuritaires restent dans le périmètre exclusif du processeur sécurisé. Il s'agit notamment des étapes nécessitant un accès à la mémoire sécurisée (telle que l'étape d'obtention de l'empreinte de référence associée à l'application), de l'étape de comparaison des empreintes courante et de référence, et de l'étape de validation du code applicatif courant qui délivre la donnée de validation. L'étape de détermination de l'empreinte du code applicatif courant peut pour sa part être indifféremment être mise en oeuvre par le processeur sécurisé ou par le processeur non sécurisé.

### 5.3 Dispositif

La **figure 2** représente, de manière schématique, la structure d'un dispositif électronique *DE* dans un mode de réalisation particulier de la technique proposée. Seuls les composants nécessaires à la compréhension de la présente technique sont représenté sur la figure 2. Ainsi, certains constituants faisant généralement partie d'un dispositif électronique tel qu'un terminal de paiement ont été volontairement omis. Ce mode de réalisation correspond à celui précédemment présenté, selon lequel le dispositif électronique *DE* comprend un processeur sécurisé *PS* et un processeur non sécurisé *PNS*. Par ailleurs, un programme d'ordinateur *PG* comprend des instructions pour l'exécution des étapes du procédé de détermination d'une validité d'un code d'une application. À l'initialisation du dispositif électronique, les instructions de code du programme d'ordinateur *PG* sont par exemple chargées dans une mémoire avant d'être exécutées, typiquement par le processeur sécurisé *PS*.

Le dispositif électronique *DE* comprend également une mémoire sécurisée (ou protégée) *MS* et une mémoire non sécurisée *MNS*. Par « mémoire sécurisée », on entend une mémoire dont l'accès au contenu est protégé par un mécanisme de sécurité approprié. Un tel mécanisme permet par exemple de vérifier l'identité et/ou l'authenticité d'un requérant souhaitant accéder à des données enregistrées dans la mémoire sécurisée en question. Typiquement, la mémoire sécurisée *MS* est attachée au processeur sécurisé *PS* qui a accès à son contenu. Le processeur sécurisé PS est notamment apte à mettre en oeuvre un mécanisme de sécurisation des données dans la mémoire sécurisée, comprenant par exemple l'effacement des données en cas d'atteinte de l'intégrité des données. Le mécanisme de sécurité peut également être matériel (couche physique recouvrant la mémoire pour en protéger la lecture...). Le processeur non sécurisé *PNS*, pour sa part, n'a pas accès au contenu de la mémoire sécurisée *MS*. La mémoire *MNS*, en revanche, est une mémoire non sécurisée. Autrement dit, l'accès au contenu de la mémoire *MNS* n'est pas protégé, contrairement à l'accès au contenu de la mémoire *MS*. Tant le processeur sécurisé *PS* que le processeur non sécurisé *PNS* peuvent donc accéder au contenu de la mémoire non sécurisée *MNS*.

Selon un mode de réalisation de la technique proposée, le processeur sécurisé reçoit par exemple en entrée une information selon laquelle un processus d'optimisation d'une application *App* chargée dans la mémoire non sécurisée *MNS* du dispositif électronique *DE* doit être exécuté ou vient d'être initié au niveau du processeur non sécurisé *PNS*. Le processeur sécurisé *PS* met alors en oeuvre les étapes du procédé de détermination d'une validité d'un code d'une application, selon les instructions du programme d'ordinateur *PG*, et notifie en sortie une donnée de validation du code de l'application *App* (par exemple une données binaire de type booléen). A cette fin, comme cela a déjà été exposé précédemment, le processeur sécurisé *PS* compare une empreinte courante associée à l'application *App* avec une empreinte de référence *Emp_Rf* qu'il obtient en mémoire sécurisée *MS*. L'empreinte courante associée à l'application *App* est pour sa part déterminée à partir du code applicatif chargé en mémoire non sécurisée *MNS*. Elle est déterminée soit par le processeur sécurisé *PS* lui-même, soit par le processeur non sécurisé *PNS* qui la transmet alors au processeur sécurisé *PS*. Si la validité du code de l'application *App* n'est pas établie, le processus d'optimisation de l'application *App* n'est pas mené à son terme, soit parce que ce processus d'optimisation n'est même pas exécuté (il n'est pas lancé), soit parce qu'il a été suspendu avant même qu'il ait commencé à opérer des modifications du code de l'application *App* (par exemple au moyen d'une interruption logicielle en provenance du processeur sécurisé). En revanche, lorsque empreinte courante associée à l'application *App* est identique à ladite empreinte de référence *Emp_Rf,* le code de l'application *App* est considéré comme intègre (valide), et le processus d'optimisation peut alors être mené à son terme, afin de délivrer, éventuellement, un code applicatif optimisé pour l'application *App.*

Le dispositif électronique *DE* comprend en outre, dans un mode de réalisation particulier, des moyens pour la mise en oeuvre de la technique proposée, notamment :
- des moyens de chargement d'une application dans ladite mémoire non sécurisée, délivrant un code applicatif courant ;
- des moyens de détermination d'une empreinte dudit code applicatif courant, délivrant une empreinte courante associée à ladite application ;
- des moyens d'obtention, au sein de ladite mémoire sécurisée, d'une empreinte de référence associée à ladite application ;
- des moyens de comparaison de l'empreinte courante avec l'empreinte de référence ; et
- des moyens de validation dudit code applicatif courant mis en oeuvre lorsque ladite empreinte courante est identique à ladite empreinte de référence, lesdits moyens de validation comprenant des moyens d'exécution d'un processus d'optimisation du code applicatif courant de ladite application, délivrant un code applicatif optimisé.

Dans un mode de réalisation particulier, le dispositif électronique est un terminal de paiement.

## Revendications

1. Procédé de détermination d'une validité d'un code d'une application (App), ledit procédé étant mis en oeuvre au sein d'un dispositif électronique comprenant un processeur non sécurisé, un processeur sécurisé, une mémoire non sécurisée et une mémoire sécurisée, ledit procédé étant **caractérisé en ce qu'**il comprend au moins une itération des étapes suivantes :
- une étape de chargement (11) de ladite application dans ladite mémoire non sécurisée, délivrant un code applicatif courant (CAC) ; et
- à détection, par le processeur sécurisé, d'une sollicitation de mise en oeuvre, par le processeur non sécurisé, d'un processus d'optimisation dudit code applicatif courant :
- une étape de génération, par ledit processeur sécurisé, d'une interruption dudit processus d'optimisation ;
- une étape de détermination (12) , par ledit processeur sécurisé, d'une empreinte dudit code applicatif courant, délivrant une empreinte courante (Emp_C) associée à ladite application ;
- une étape d'obtention (13), par ledit processeur sécurisé, au sein de ladite mémoire sécurisée, d'une empreinte de référence (Emp_Rf) associée à ladite application ;
- une étape de comparaison (14), par ledit processeur sécurisé, de l'empreinte courante (Emp_C) avec l'empreinte de référence (Emp_Rf); et
- lorsque ladite empreinte courante (Emp_C) est identique à ladite empreinte de référence (Emp_Rf), une étape de validation (15), par ledit processeur sécurisé, dudit code applicatif courant, comprenant :
- une étape de délivrance d'une autorisation de reprise d'exécution dudit processus d'optimisation (151) du code applicatif courant de ladite application, ladite exécution délivrant un code applicatif optimisé (CAO) ;
- une étape de détermination (152) d'une empreinte dudit code applicatif optimisé (CAO), délivrant une empreinte post-optimisation (Emp_PO) associée à ladite application ;
- une étape d'enregistrement (153) de ladite empreinte post-optimisation (Emp_PO) dans ladite mémoire sécurisée, en tant que nouvelle empreinte de référence associée à ladite application.

2. Procédé selon la revendication 1 **caractérisé en ce qu'**il comprend une étape d'initialisation de ladite empreinte de référence, mise en oeuvre lors d'une installation de ladite application sur ledit dispositif électronique.

3. Procédé selon la revendication 2 **caractérisée en ce que** ladite étape d'initialisation de l'empreinte de référence comprend :
- une étape de vérification d'une signature d'au moins un paquet d'installation de ladite application ; et
- lorsque ladite vérification de signature est positive :
- une étape d'obtention d'une première empreinte de référence pour ladite application ;
- une étape d'enregistrement de ladite première empreinte de référence dans ladite mémoire sécurisée.

4. Procédé selon la revendication 1 **caractérisé en ce qu'**il comprend, lorsque ladite empreinte courante est différente de ladite empreinte de référence, une étape de mise en oeuvre d'au moins une mesure de protection.

5. Procédé selon la revendication 4, **caractérisé en ce que** ladite au moins une mesure de protection appartient au groupe comprenant :
- l'affichage d'un message d'alerte sur un écran dudit dispositif électronique ;
- le blocage de toute transmission de données à destination de ladite application ;
- le blocage de ladite application ;
- le blocage dudit dispositif électronique.

6. Procédé selon la revendication 1 **caractérisé en ce que** l'empreinte courante et l'empreinte de référence associées à ladite application sont déterminées par la mise en oeuvre d'une fonction de hachage.

7. Procédé selon la revendication 1 **caractérisé en ce qu'**il comprend, préalablement à ladite étape d'exécution d'un processus d'optimisation, une étape de vérification de l'intégrité du code du processus d'optimisation, comprenant :
- une étape de détermination d'une empreinte du code dudit processus d'optimisation, délivrant une empreinte courante associée audit processus d'optimisation ;
- une étape d'obtention, dans ladite mémoire sécurisée, d'une empreinte de référence associée audit processus d'optimisation ;
- une étape de comparaison de ladite empreinte courante associée au processus d'optimisation avec ladite empreinte de référence associée au processus d'optimisation ; et
- lorsque l'empreinte courante associée au processus d'optimisation est identique à l'empreinte de référence associée au processus d'optimisation, la mise en oeuvre de ladite étape d'exécution du processus d'optimisation ;
- lorsque l'empreinte courante associée au processus d'optimisation est différente de l'empreinte de référence associée au processus d'optimisation, la suspension de ladite étape d'exécution du processus d'optimisation.

8. Dispositif électronique comprenant un processeur non sécurisé, un processeur sécurisé, une mémoire non sécurisée et une mémoire sécurisée, ledit dispositif étant **caractérisé en ce qu'**il comprend :
- des moyens de chargement d'une application dans ladite mémoire non sécurisée, délivrant un code applicatif courant ;
- des moyens de détection, par le processeur sécurisé, d'une sollicitation de mise en oeuvre, par le processeur non sécurisé, d'un processus d'optimisation dudit code applicatif courant, ladite détection activant :
- des moyens de génération, par ledit processeur sécurisé, d'une interruption dudit processus d'optimisation ;
- des moyens de détermination, par ledit processeur sécurisé, d'une empreinte dudit code applicatif courant, délivrant une empreinte courante associée à ladite application ;
- des moyens d'obtention, par ledit processeur sécurisé, au sein de ladite mémoire sécurisée, d'une empreinte de référence associée à ladite application ;
- des moyens de comparaison, par ledit processeur sécurisé, de l'empreinte courante avec l'empreinte de référence ; et
- des moyens de validation, par ledit processeur sécurisé, dudit code applicatif courant mis en oeuvre lorsque ladite empreinte courante est identique à ladite empreinte de référence, lesdits moyens de validation comprenant :
- des moyens de délivrance d'une autorisation de reprise d'exécution dudit processus d'optimisation du code applicatif courant de ladite application, ladite exécution délivrant un code applicatif optimisé ;
- des moyens de détermination d'une empreinte dudit code applicatif optimisé (CAO), délivrant une empreinte post-optimisation associée à ladite application ;
- des moyens d'enregistrement de ladite empreinte post-optimisation dans ladite mémoire sécurisée, en tant que nouvelle empreinte de référence associée à ladite application.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de détermination d'une validité d'un code d'une application selon l'une quelconque des revendications 1 à 7, lorsqu'il est exécuté sur un ordinateur.

## Patentansprüche

1. Verfahren zur Bestimmung einer Gültigkeit eines Codes einer Anwendung (App), wobei das Verfahren innerhalb einer elektronischen Vorrichtung durchgeführt wird, die einen ungesicherten Prozessor, einen gesicherten Prozessor, einen ungesicherten Speicher und einen gesicherten Speicher umfasst, wobei das Verfahren **dadurch gekennzeichnet ist, dass** es mindestens eine Iteration der folgenden Schritte umfasst:
- einen Schritt des Ladens (11) der Anwendung in den ungesicherten Speicher, der einen aktuellen Anwendungscode (CAC) ausgibt; und
- bei Erkennung durch den gesicherten Prozessor einer Aufforderung zum Durchführen eines Optimierungsprozesses des aktuellen Anwendungscodes durch den ungesicherten Prozessor:
-- einen Schritt der Erzeugung einer Unterbrechung des Optimierungsprozesses durch den gesicherter Prozessor;
-- einen Schritt der Bestimmung (12) eines Fingerabdrucks des aktuellen Anwendungscodes durch den gesicherten Prozessor, der einen aktuellen Fingerabdruck (Emp_C) liefert, der der Anwendung zugeordnet ist;
-- einen Schritt des Erhaltens (13) in dem gesicherten Speicher eines Referenzfingerabdruck (Emp_Rf) durch den gesicherten Prozessor, der der Anwendung zugeordnet ist,
-- einen Schritt des Vergleichens (14) des aktuellen Fingerabdrucks (Emp_C) mit dem Referenzfingerabdruck (Emp_Rf) durch den gesicherten Prozessor; und
-- wenn der aktuelle Fingerabdruck (Emp_C) mit dem Referenzfingerabdruck (Emp_Rf) identisch ist, einen Schritt der Validierung (15) des aktuellen Anwendungscodes durch den gesicherten Prozessor, Folgendes umfassend:
--- einen Schritt der Erteilung einer Genehmigung zur Wiederaufnahme der Ausführung des Optimierungsprozesses (151) des aktuellen Anwendungscodes der Anwendung, wobei die Ausführung einen optimierten Anwendungscode (CAO) liefert;
--- einen Schritt der Bestimmung (152) eines Fingerabdrucks des optimierten Anwendungscodes (CAO), der einen der Post-Optimierungsfingerabdruck (Emp_PO) liefert, der der Anwendung zugeordnet ist;
--- einen Schritt des Speicherns (153) des PostOptimierungsfingerabdrucks (Emp_PO) in dem gesicherten Speicher als neuer Referenzfingerabdruck, der mit der Anwendung verknüpft ist.

2. Verfahren nach Anspruch 1, **dadurch gekennzeichnet, dass** es einen Schritt der Initialisierung des Referenzfingerabdrucks umfasst, der bei einer Installation der Anwendung auf der elektronischen Vorrichtung durchgeführt wird.

3. Verfahren nach Anspruch 2, **dadurch gekennzeichnet, dass** der Schritt der Initialisierung des Referenzfingerabdrucks Folgendes umfasst:
- einen Schritt der Überprüfung einer Signatur von mindestens einem Installationspaket der Anwendung; und
- wenn die Überprüfung der Signatur positiv ausfällt:
-- einen Schritt des Erhaltens eines ersten Referenzfingerabdrucks für die Anwendung;
-- einen Schritt des Speicherns des ersten Referenzfingerabdrucks in dem gesicherten Speicher.

4. Verfahren nach Anspruch 1, **dadurch gekennzeichnet, dass** es, wenn sich der aktuelle Fingerabdruck von dem Referenzfingerabdruck unterscheidet, einen Schritt der Durchführung mindestens einer Schutzmaßnahme umfasst.

5. Verfahren nach Anspruch 4, **dadurch gekennzeichnet, dass** die mindestens eine Schutzmaßnahme zu der Gruppe gehört, die besteht aus:
- der Anzeige einer Warnmeldung auf einem Bildschirm der elektronischen Vorrichtung;
- der Blockierung jeglicher Datenübertragung an die genannte Anwendung;
- der Blockierung der Anwendung;
- der Blockierung der elektronischen Vorrichtung.

6. Verfahren nach Anspruch 1, **dadurch gekennzeichnet, dass** der aktuelle Fingerabdruck und der Referenzfingerabdruck, die der Anwendung zugeordnet sind, durch die Implementierung einer Hashfunktion bestimmt werden.

7. Verfahren nach Anspruch 1, **dadurch gekennzeichnet, dass** es vor dem Schritt der Ausführung eines Optimierungsprozesses einen Schritt der Validierung der Integrität des Codes des Optimierungsprozesses umfasst, Folgendes umfassend:
- einen Schritt der Bestimmung eines Fingerabdrucks des Codes des Optimierungsprozesses, der aktuellen Fingerabdruck liefert, der dem Optimierungsprozess zugeordnet ist;
- einen Schritt des Erhaltens eines Referenzfingerabdrucks in dem gesicherten Speicher, der dem Optimierungsprozess zugeordnet ist;
- einen Schritt des Vergleichs des Fingerabdrucks, der dem Optimierungsprozess zugeordnet ist, mit dem Referenzfingerabdruck, der dem Optimierungsprozess zugeordnet ist; und
- wenn der aktuelle Fingerabdruck, der dem Optimierungsprozess zugeordnet ist, mit dem Referenzfingerabdruck, der dem Optimierungsprozess zugeordnet ist, identisch ist, die Durchführung des Schritts zum Ausführen des Optimierungsprozesses;
- wenn sich der aktuelle Fingerabdruck, der dem Optimierungsprozess zugeordnet ist, von dem Referenzfingerabdruck, der dem Optimierungsprozess zugeordnet ist, unterscheidet, das Aussetzen des Schritts der Ausführung des Optimierungsprozesses.

8. Elektronische Vorrichtung, umfassend einen ungesicherten Prozessor, einen gesicherten Prozessor, einen ungesicherten Speicher und einen gesicherten Speicher, wobei die Vorrichtung **dadurch gekennzeichnet ist, dass** sie Folgendes umfasst:
- Mittel zum Laden einer Anwendung in den ungesicherten Speicher, die einen aktuellen Anwendungscode liefern;
- Mittel zur Erkennung durch den gesicherten Prozessor einer Aufforderung zur Durchführung eines Optimierungsprozesses des aktuellen Anwendungscodes durch den nicht gesicherten Prozessor, wobei diese Erkennung Folgendes aktiviert:
-- Mittel zur Erzeugung einer Unterbrechung des Optimierungsprozesses durch den sicheren Prozessor;
-- Mittel zur Bestimmung eines Fingerabdrucks des aktuellen Anwendungscodes durch den sicheren Prozessor, die einen aktuellen Fingerabdruck liefern, der der Anwendung zugeordnet ist;
-- Mittel zum Erhalten durch den gesicherten Prozessor innerhalb des gesicherten Speichers eines Referenzfingerabdrucks, der der Anwendung zugeordnet ist;
-- Mittel zum Vergleich durch den gesicherten Prozessor des aktuellen Fingerabdrucks mit dem Referenzfingerabdruck; und
-- Mittel zur Validierung durch den gesicherten Prozessor des aktuellen Anwendungscodes, die durchgeführt wird, wenn der aktuelle Fingerabdruck mit dem Referenzfingerabdruck identisch ist, wobei die Mittel zur Validierung Folgendes umfassen:
--- Mittel zur Erteilung einer Genehmigung zur Wiederaufnahme der Ausführung des Optimierungsprozesses des aktuellen Anwendungscodes der Anwendung, wobei die Ausführung einen optimierten Anwendungscode liefert;
--- Mittel zur Bestimmung eines Fingerabdrucks des optimierten Anwendungscodes (CAO), die einen Postoptimierungsfingerabdrucks liefern, der der Anwendung zugeordnet ist;
--- Mittel zum Speichern des Postoptimierungsfingerabdrucks in dem gesicherten Speicher als neuer Referenzfingerabdruck, der der Anwendung zugeordnet ist.

9. Computerprogrammprodukt, das von einem Kommunikationsnetz heruntergeladen und/oder auf einem computerlesbaren Medium gespeichert und/oder von einem Mikroprozessor ausgeführt werden kann, **dadurch gekennzeichnet, dass** es Programmcodeanweisungen für die Ausführung eines Verfahrens zur Bestimmung einer Gültigkeit eines Codes einer Anwendung nach einem der Ansprüche 1 bis 7 enthält, wenn es auf einem Computer ausgeführt wird.

## Claims

1. A method for determining the validity of a code of an application (App), said method being implemented within an electronic device comprising a non-secure processor, a secure processor, a non-secure memory and a secure memory, said method being **characterized in that** it comprises at least one iteration of the following steps:
- a step (11) of loading said application into said non-secure memory, issuing a current application code (CAC); and
- upon detection, by the secure processor, of a request for implementing, by the non-secure processor, an optimization process of said current application code:
∘ a step of generating, by said secure processor, an interruption of said optimization process;
∘ a step of determining (12), by said secure processor, a fingerprint of said current application code, issuing a current fingerprint (Emp_C) associated with said application;
∘ a step of obtaining (13), by said secure processor, within said secure memory, a reference fingerprint (Emp_Rf) associated with said application;
∘ a step of comparing (14), by said secure processor, of the current fingerprint (Emp_C) with the reference fingerprint (Emp_Rf); and
∘ when said current fingerprint (Emp_C) is identical to said reference fingerprint (Emp _Rf), a validation step (15), by said secure processor, of said current application code, comprising:
▪ a step of issuing an authorization to resume execution of said optimization process (151) of the current application code of said application, said execution issuing an optimized application code (CAO);
▪ a step of determining (152) a fingerprint of said optimized application code (CAO), issuing a post-optimization fingerprint (Emp_PO) associated with said application;
▪ a step of recording (153) said post-optimization fingerprint (Emp_PO) in said secure memory, as a new reference fingerprint associated with said application.

2. The method according to claim 1 **characterized in that** it comprises a step of initializing said reference fingerprint, implemented during an installation of said application on said electronic device.

3. The method according to claim 2 **characterized in that** said step of initializing the reference fingerprint comprises:
- a step of verifying a signature of at least one installation package of said application; and
- when said signature verification is positive:
∘ a step of obtaining a first reference fingerprint for said application;
∘ a step of recording said first reference fingerprint in said secure memory.

4. The method according to claim 1 **characterized in that** it comprises, when said current fingerprint is different from said reference fingerprint, a step of implementing at least one protection measure.

5. The method according to claim 4, **characterized in that** said at least one protection measure belongs to the group comprising:
- the display of an alert message on a screen of said electronic device;
- the blocking of any transmission of data to said application;
- the blocking of said application;
- the blocking of said electronic device.

6. The method according to claim 1 **characterized in that** the current fingerprint and the reference fingerprint associated with said application are determined by the implementation of a hash function.

7. The method according to claim 1 **characterized in that** it comprises, prior to said step of executing an optimization process, a step of verifying the integrity of the code of the optimization process, comprising:
- a step of determining a fingerprint of the code of said optimization process, issuing a current fingerprint associated with said optimization process;
- a step of obtaining, in said secure memory, a reference fingerprint associated with said optimization process;
- a step of comparing said current fingerprint associated with the optimization process with said reference fingerprint associated with the optimization process;
and
- when the current fingerprint associated with the optimization process is identical to the reference fingerprint associated with the optimization process, the implementation of said step of executing the optimization process;
- when the current fingerprint associated with the optimization process is different from the reference fingerprint associated with the optimization process, the suspension of said step of executing the optimization process.

8. An electronic device comprising a non-secure processor, a secure processor, a non-secure memory and a secure memory, said device being **characterized in that** it comprises:
- means for loading an application into said non-secure memory, issuing a current application code;
- means for detecting, by the secure processor, an implementation request, by the non-secure processor, of an optimization process of said current application code, said detection activating:
∘ means for generating, by said secure processor, an interruption of said optimization process;
∘ means for determining, by said secure processor, a fingerprint of said current application code, issuing a current fingerprint associated with said application;
∘ means for obtaining, by said secure processor, within said secure memory, a reference fingerprint associated with said application;
∘ means for comparing, by said secure processor, the current fingerprint with the reference fingerprint; and
∘ means for validating, by said secure processor, said current application code implemented when said current fingerprint is identical to said reference fingerprint, said validation means comprising:
▪ means for issuing an authorization to resume execution of said optimization process of the current application code of said application, said execution issuing an optimized application code;
▪ means for determining a fingerprint of said optimized application code (CAO), issuing a post-optimization fingerprint associated with said application;
▪ means for recording said post-optimization fingerprint in said secure memory, as a new reference fingerprint associated with said application.

9. A computer program product downloadable from a communication network and/or stored on a computer-readable medium and/or executable by a microprocessor, **characterized in that** it comprises program code instructions for the execution of a method for determining a validity of an application code according to any one of claims 1 to 7, when executed on a computer.
